# EUROPEAN PATENT APPLICATION

(11) **EP 3 677 943 A1**
(43) Date of publication of application: **08.07.2020**
(21) Application number: 18852471.4
(22) Date of filing: 07.08.2018
(51) Int. Cl.: G02B 21/00, G01N 21/27, G01N 21/45, G02B 7/28, G02B 21/26, G02B 21/36

(54) **IMAGING CONTROL DEVICE, METHOD, AND PROGRAM**

(30) Priority: 29.08.2017 JP 2017163961
(71) Applicant: FUJIFILM Corporation, Tokyo 106-8620 (JP)
(72) Inventor: WAKUI Takashi, Ashigarakami-gun Kanagawa 258-8538 (JP)
(74) Representative: Klunker IP Patentanwälte PartG mbB
(86) International application number: PCT/JP2018/029607
(87) International publication number: WO 2019/044424

(57) **Abstract**

An object is to increase a speed of an auto-focus control and perform evaluation with higher accuracy and high reliability in an imaging control apparatus, a method, and a program. An auto-focus control unit 21 performs an auto-focus control based on a first position of a container in a vertical direction at a target observation position. The first position is detected by a displacement sensor preceding the target observation position in a main scanning direction. A processing control unit 23 controls a process for observation of the target observation position based on the first position and a second position of the container in the vertical direction at the target observation position. The second position is detected by a displacement sensor succeeding the target observation position in the main scanning direction.

## Description

### BACKGROUND OF THE INVENTION

### 1. Field of the Invention

The present invention relates to an imaging control apparatus, a method, and a program for controlling an imaging apparatus that observes an image of the entire observation target by relatively moving a stage on which a container accommodating the observation target is installed, and an image-forming optical system which forms the image of the observation target.

### 2. Description of the Related Art

A pluripotent stem cell such as an embryonic stem (ES) cell and an induced pluripotent stem (iPS) cell has a capability of differentiating into various tissues. The ability to apply the pluripotent stem cell to regenerative medicine, development of medication, diagnosis of disease, and the like has drawn attention.

A method of imaging the pluripotent stem cell such as the ES cell and the iPS cell, a differentiation-induced cell, and the like by a microscope or the like and evaluating a differentiation state and the like of the cells by perceiving the features of the image is suggested.

In the imaging of the cells by the microscope as described above, it is suggested that so-called tiled imaging is performed in order to acquire an image of a high magnification and a wide field of view. Specifically, for example, a method of scanning each observation position in a well by moving the stage on which a well plate is installed with respect to the image-forming optical system, capturing an image of each observation position, and then, generating a composite image by linking the image of each observation position is suggested.

In the case of performing the tiled imaging, it is suggested that a high image quality image having less blurriness is acquired by performing an auto-focus control at each observation position in a cultivation container. In the case of performing the auto-focus control, it is important to perform high speed high accuracy auto-focus control from the viewpoint of reducing an imaging time period.

However, for example, in the case of performing the tiled imaging by using the well plate including a plurality of wells as the cultivation container, scanning the entire well plate by the image-forming optical system, and performing the auto-focus control at each observation position, the thickness of the bottom portion of each well varies for each well due to a manufacturing error and the like. In addition, depending on the way of installing the cultivation container on the stage, the bottom surface of the cultivation container is installed in an inclined state with respect to the stage, and an installation error occurs. Accordingly, the height of the bottom surface of each well may significantly vary. In a case where the height of the bottom surface of each well significantly varies, the auto-focus control cannot be accurately performed in a case where a position at which the height of the bottom surface of the well is measured for the auto-focus control differs from a position at which the imaging is performed.

In a case where the auto-focus control cannot be accurately performed, an image of an observation region may be obtained as a blurred image. An image of each individual cell cannot be extracted with high accuracy from a degraded image such as the blurred image. Thus, for example, in a case where the evaluation is performed using a feature amount indicating the state of each individual cell, the accuracy of the evaluation result is decreased, and the evaluation result may have low reliability. That is, in a case where the degraded image is evaluated in the same manner as a non-degraded image, an accurate evaluation result may not be obtained.

Thus, a method of detecting the inclination of a sample surface by a plurality of focus detection beams and correcting the focus by moving the stage is suggested (refer to WO2015/133176A). In addition, a method of arranging a plurality of distance sensors around the image-forming optical system, calculating the inclination of the stage based on a distance to the stage measured by each distance sensor, and controlling the inclination of the stage is suggested (refer to JP2015-230393A). An image not having blurriness can be acquired using the methods disclosed in WO2015/133176A and JP2015-230393A.

### SUMMARY OF THE INVENTION

In the methods disclosed in WO2015/133176A and JP2015-230393A, images that are focused at a plurality of positions are acquired by the plurality of focus detection beams or the plurality of distance sensors, and the inclination of the stage is detected based on the plurality of images. Since it takes time to perform calculation for detecting the inclination of the container or the stage, it takes time to perform the auto-focus control.

The stage vibrates during movement or inclines during movement due to the accuracy and the like of a movement mechanism. In such a case, even in a case where the inclination of the stage is corrected using the methods disclosed in WO2015/133176A and JP2015-230393A, the image acquired at the target observation position is blurred. Accordingly, high reliability evaluation cannot be performed using the methods disclosed in WO2015/133176A and JP2015-230393A.

The present invention is conceived in view of the above matters. An object of the present invention is to increase the speed of an auto-focus control and perform evaluation with higher accuracy and high reliability.

An imaging control apparatus of the present invention comprises a stage on which a container accommodating an observation target is installed, an imaging system that includes an imaging element capturing an image of the observation target, an image-forming optical system that forms the image of the observation target in the container on the imaging element, a horizontal drive unit that moves at least one of the stage or the image-forming optical system in a main scanning direction and a sub-scanning direction intersecting with the main scanning direction in a horizontal plane and causes the at least one of the stage or the image-forming optical system to reciprocate in the main scanning direction, a scanning control unit that controls the horizontal drive unit, a detection unit that includes at least two displacement sensors and switches the displacement sensor to be used in accordance with a change of the main scanning direction, the displacement sensors being arranged in the main scanning direction with the image-forming optical system interposed between the displacement sensors and detecting a vertical directional position of the container installed on the stage, an auto-focus control unit that performs an auto-focus control based on a first position of the container in a vertical direction at the target observation position, the first position being detected by the displacement sensor preceding the image-forming optical system in the main scanning direction before the image-forming optical system reaches the target observation position in the container, and a processing control unit that controls a process for observation of the target observation position based on the first position and a second position of the container in the vertical direction at the target observation position, the second position being detected by the displacement sensor succeeding the image-forming optical system in the main scanning direction after the image-forming optical system reaches the target observation position in the container.

The "displacement sensor preceding the image-forming optical system in the main scanning direction" means a displacement sensor that reaches the target observation position before the image-forming optical system reaches the target observation position. The "displacement sensor succeeding the image-forming optical system in the main scanning direction" means a displacement sensor that reaches the target observation position after the image-forming optical system reaches the target observation position.

In the imaging control apparatus according to the present invention, in a case where a difference between the first position and the second position is greater than or equal to a predetermined threshold value at the target observation position, the processing control unit may control at least one of imaging of the target observation position or image processing on an image of the target observation position.

In the imaging control apparatus according to the present invention, in a case where the difference between the first position and the second position is greater than the threshold value at the target observation position, the processing control unit may re-image the target observation position.

In the imaging control apparatus according to the present invention, in a case where the difference between the first position and the second position is greater than the threshold value at the target observation position, the processing control unit may perform notification that the difference between the first position and the second position is greater than the threshold value at the target observation position.

In a case where the notification is performed, an operator performs a process of re-capturing a target captured image. Thus, in the present invention, the "notification" is included in control of imaging.

In the imaging control apparatus according to the present invention, in a case where the difference between the first position and the second position is greater than the threshold value at the target observation position, the processing control unit may perform a sharpness enhancement process on the image of the target observation position.

In the imaging control apparatus according to the present invention, the processing control unit may change an evaluation method for evaluating a state of the observation target included in an image of the target observation position depending on whether or not a difference between the first position and the second position is greater than a predetermined threshold value at the target observation position.

In the imaging control apparatus according to the present invention, in a case where the difference between the first position and the second position is greater than the threshold value at the target observation position, the processing control unit may evaluate the image of the target observation position using an evaluation method relatively susceptible to degradation, and in a case where the difference between the first position and the second position is less than or equal to the threshold value at the target observation position, the processing control unit may evaluate the image of the target observation position using an evaluation method relatively insusceptible to degradation.

In the imaging control apparatus according to the present invention, in a case where the difference between the first position and the second position is greater than the threshold value at the target observation position, the processing control unit may perform the evaluation using a feature amount indicating the state of the observation target included in the image of the target observation position, and in a case where the difference between the first position and the second position is less than or equal to the threshold value at the target observation position, the processing control unit may perform the evaluation using an image feature amount.

In the imaging control apparatus according to the present invention, the feature amount indicating the state of the observation target may include at least one of a feature amount of a state of each individual cell, a feature amount of a nucleolus included in the cell, a feature amount of a white streak, a feature amount of a nucleus included in the cell, or a nucleocytoplasmic ratio (NC ratio) of the cell.

In the imaging control apparatus according to the present invention, in a case where the difference between the first position and the second position is greater than the threshold value at the target observation position, the processing control unit may exclude the target observation position from an evaluation target.

An imaging control method according to the present invention is an imaging control method in an imaging control apparatus including a stage on which a container accommodating an observation target is installed, an imaging system that includes an imaging element capturing an image of the observation target, an image-forming optical system that forms the image of the observation target in the container on the imaging element, a horizontal drive unit that moves at least one of the stage or the image-forming optical system in a main scanning direction and a sub-scanning direction intersecting with the main scanning direction in a horizontal plane and causes the at least one of the stage or the image-forming optical system to reciprocate in the main scanning direction, a scanning control unit that controls the horizontal drive unit, and a detection unit that includes at least two displacement sensors and switches the displacement sensor to be used in accordance with a change of the main scanning direction, the displacement sensors being arranged in the main scanning direction with the image-forming optical system interposed between the displacement sensors and detecting a vertical directional position of the container installed on the stage. The method comprises a step of performing an auto-focus control based on a first position of the container in a vertical direction at the target observation position, the first position being detected by the displacement sensor preceding the image-forming optical system in the main scanning direction before the image-forming optical system reaches the target observation position in the container, and a step of controlling a process for observation of the target observation position based on the first position and a second position of the container in the vertical direction at the target observation position, the second position being detected by the displacement sensor succeeding the image-forming optical system in the main scanning direction after the image-forming optical system reaches the target observation position in the container.

An imaging control program according to the present invention is an imaging control program causing a computer to execute an imaging control method in an imaging control apparatus including a stage on which a container accommodating an observation target is installed, an imaging system that includes an imaging element capturing an image of the observation target, an image-forming optical system that forms the image of the observation target in the container on the imaging element, a horizontal drive unit that moves at least one of the stage or the image-forming optical system in a main scanning direction and a sub-scanning direction intersecting with the main scanning direction in a horizontal plane and causes the at least one of the stage or the image-forming optical system to reciprocate in the main scanning direction, a scanning control unit that controls the horizontal drive unit, and a detection unit that includes at least two displacement sensors and switches the displacement sensor to be used in accordance with a change of the main scanning direction, the displacement sensors being arranged in the main scanning direction with the image-forming optical system interposed between the displacement sensors and detecting a vertical directional position of the container installed on the stage. The program causes the computer to execute a procedure of performing an auto-focus control based on a first position of the container in a vertical direction at the target observation position, the first position being detected by the displacement sensor preceding the image-forming optical system in the main scanning direction before the image-forming optical system reaches the target observation position in the container, and a procedure of controlling a process for observation of the target observation position based on the first position and a second position of the container in the vertical direction at the target observation position, the second position being detected by the displacement sensor succeeding the image-forming optical system in the main scanning direction after the image-forming optical system reaches the target observation position in the container.

According to the present invention, the auto-focus control is performed based on the first position of the container in the vertical direction at the target observation position. The first position is detected by the displacement sensor preceding the image-forming optical system in the main scanning direction before the image-forming optical system reaches the target observation position in the container. Thus, the auto-focus control can be performed at a high speed.

In addition, the process for observation of the target observation position is controlled based on the first position and the second position of the container in the vertical direction at the target observation position. The second position is detected by the displacement sensor succeeding the image-forming optical system in the main scanning direction. Thus, even in a case where the vertical directional position of the container is changed due to vibration and the like after the detection by the displacement sensor preceding in the main scanning direction, the change can be detected by the displacement sensor succeeding in the main scanning direction. Accordingly, the image of the target observation position on which a control for observation is performed based on the first position and the second position can be used, and the observation target can be evaluated with accuracy and high reliability.

### BRIEF DESCRIPTION OF THE DRAWINGS

Fig. 1 is a diagram illustrating a schematic configuration of a microscope apparatus in a microscope observation system of a first embodiment.
Fig. 2 is a schematic diagram illustrating a configuration of an image-forming optical system.
Fig. 3 is a perspective view illustrating a configuration of a stage.
Fig. 4 is a block diagram illustrating a configuration of an imaging control apparatus of the first embodiment.
Fig. 5 is a diagram illustrating a scanning position of an observation position in a cultivation container.
Fig. 6 is a diagram illustrating a positional relationship among the image-forming optical system, a first displacement sensor, a second displacement sensor, and the cultivation container in a case where the observation position is present at any position in the cultivation container.
Fig. 7 is a diagram for describing switching between the first displacement sensor and the second displacement sensor.
Fig. 8 is a diagram for describing one example of a timing of an auto-focus control.
Fig. 9 is a diagram for describing a Z-directional positional relationship between the cultivation container and the first and second displacement sensors.
Fig. 10 is a diagram illustrating one example of a phase difference image of each observation position in a well.
Fig. 11 is a flowchart illustrating a process performed in the first embodiment.
Fig. 12 is a flowchart illustrating a process performed in the first embodiment.
Fig. 13 is a diagram illustrating a display example of an evaluation result combined in units of wells.
Fig. 14 is a flowchart illustrating a process performed in a second embodiment.

### DESCRIPTION OF THE PREFERRED EMBODIMENTS

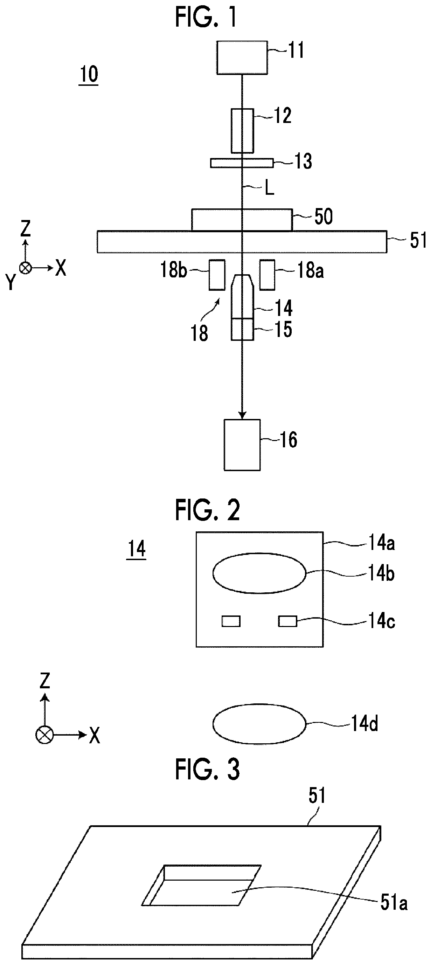

Hereinafter, a microscope observation system using an imaging control apparatus, a method, and a program according to a first embodiment of the present invention will be described in detail with reference to the drawings. Fig. 1 is a diagram illustrating a schematic configuration of a microscope apparatus 10 in the microscope observation system of the first embodiment.

The microscope apparatus 10 captures a phase difference image of a cultured cell that is an observation target. Specifically, as illustrated in Fig. 1, the microscope apparatus 10 comprises a white light source 11 emitting white light, a condenser lens 12, a slit plate 13, an image-forming optical system 14, an image-forming optical system drive unit 15, an imaging element 16, and a detection unit 18.

In the slit plate 13, a slit of a ring shape through which white light is transmitted is disposed with respect to a light screen that blocks the white light emitted from the white light source 11. Illumination light L of a ring shape is formed by causing the white light to pass through the slit.

Fig. 2 is a diagram illustrating a detailed configuration of the image-forming optical system 14. As illustrated in Fig. 2, the image-forming optical system 14 comprises a phase difference lens 14a and an image-forming lens 14d. The phase difference lens 14a comprises an objective lens 14b and a phase plate 14c. In the phase plate 14c, a phase ring is formed with respect to a transparent plate that is transparent with respect to the wavelength of the illumination light L. The size of the slit of the slit plate 13 is in a conjugate relationship with the phase ring of the phase plate 14c.

In the phase ring, a phase film that shifts the phase of incident light by 1/4 wavelengths, and a light reduction filter that reduces incident light are formed in a ring shape. The phase of direct light incident on the phase ring is shifted by 1/4 wavelengths by passing through the phase ring, and the brightness of the direct light is reduced. Meanwhile, most of diffractive light that is diffracted by the observation target passes through the transparent plate of the phase plate 14c, and the phase and the brightness of the diffractive light are not changed.

The phase difference lens 14a that includes the objective lens 14b moves in the optical axis direction of the objective lens 14b by the image-forming optical system drive unit 15 illustrated in Fig. 1. In the present embodiment, the optical axis direction of the objective lens 14b and a Z direction (vertical direction) are the same directions. An auto-focus control is performed by moving the phase difference lens 14a in the Z direction, and the contrast of the phase difference image captured by the imaging element 16 is adjusted.

It may be configured that the magnification of the phase difference lens 14a can be changed. Specifically, it may be configured that the phase difference lens 14a or the image-forming optical system 14 having different magnifications can be replaced. The replacement of the phase difference lens 14a or the image-forming optical system 14 may be automatically performed or may be manually performed by a user.

The image-forming optical system drive unit 15 comprises an actuator such as a piezoelectric element and is driven based on a control signal output from an auto-focus control unit 21 described later. It is configured that the phase difference image that passes through the phase difference lens 14a passes through the image-forming optical system drive unit 15. The configuration of the image-forming optical system drive unit 15 is not limited to the piezoelectric element. Other well-known configurations in which the phase difference lens 14a can be moved in the Z direction can be used.

The phase difference image passing through the phase difference lens 14a and the image-forming optical system drive unit 15 is incident on the image-forming lens 14d, and the image-forming lens 14d forms the phase difference image on the imaging element 16.

The imaging element 16 captures the phase difference image formed by the image-forming lens 14d. A charge-coupled device (CCD) image sensor, a complementary metal-oxide semiconductor (CMOS) image sensor, or the like is used as the imaging element 16. An imaging element in which color filters of red, green, and blue (RGB) are disposed, or a monochrome imaging element may be used as the imaging element.

The detection unit 18 detects the Z-directional (vertical directional) position of a cultivation container 50 installed on a stage 51. Specifically, the detection unit 18 comprises a first displacement sensor 18a and a second displacement sensor 18b. The first displacement sensor 18a and the second displacement sensor 18b are arranged in an X direction illustrated in Fig. 1 with the phase difference lens 14a interposed therebetween. The first displacement sensor 18a and the second displacement sensor 18b in the present embodiment are laser displacement meters and detect the Z-directional position of the bottom surface of the cultivation container 50 by irradiating the cultivation container 50 with laser light and detecting reflective light. The bottom surface of the cultivation container 50 is a boundary surface between the bottom portion of the cultivation container 50 and the cell which is the observation target, that is, an observation target installation surface.

Positional information that represents the Z-directional position of the cultivation container 50 detected by the detection unit 18 is output to the auto-focus control unit 21. The auto-focus control unit 21 controls the image-forming optical system drive unit 15 and performs the auto-focus control based on the input positional information. The detection of the position of the cultivation container 50 by the first displacement sensor 18a and the second displacement sensor 18b and the auto-focus control by the auto-focus control unit 21 will be described in detail later.

The stage 51 is disposed between the slit plate 13, and the phase difference lens 14a and the detection unit 18. The cultivation container 50 that accommodates the cell which is the observation target is installed on the stage 51.

A Petri dish, a dish, a well plate, or the like can be used as the cultivation container 50. The cell accommodated in the cultivation container 50 includes a pluripotent stem cell such as an iPS cell and an ES cell, cells of a nerve, skin, cardiac muscle, and a liver that are differentiation-induced from the stem cell, cells of skin, a retina, cardiac muscle, a blood cell, and an organ that are acquired from a human body, and the like.

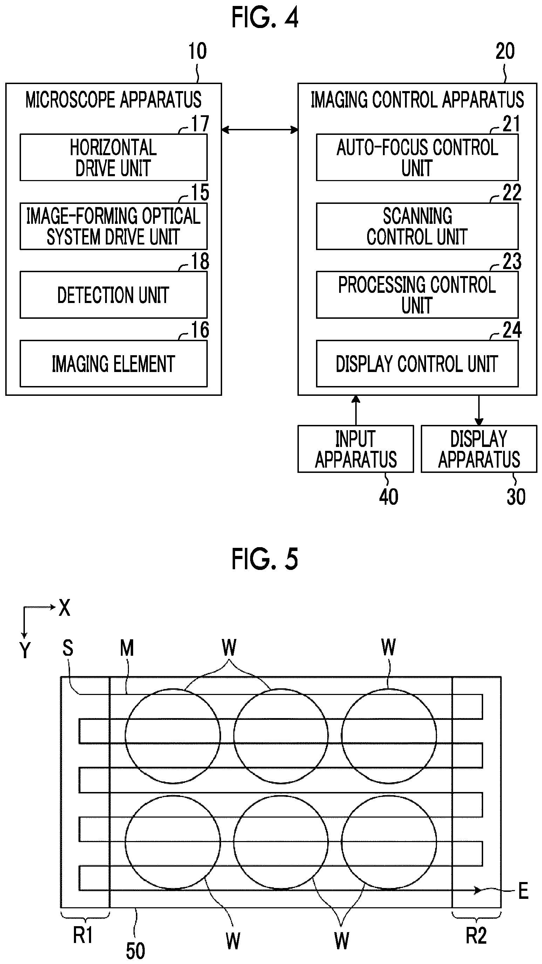

By a horizontal drive unit 17 (refer to Fig. 4) described later, the stage 51 is moved in the X direction and a Y direction that are orthogonal to each other. The X direction and the Y direction are directions that are orthogonal to the Z direction, and are directions that are orthogonal to each other in a horizontal plane. In the present embodiment, the X direction is set as a main scanning direction, and the Y direction is set as a sub-scanning direction.

Fig. 3 is a diagram illustrating one example of the stage 51. An opening 51a of a rectangular shape is formed at the center of the stage 51. It is configured that the cultivation container 50 is installed on a member forming the opening 51a, and the phase difference image of the cell in the cultivation container 50 passes through the opening 51a.

Next, a configuration of an imaging control apparatus 20 that controls the microscope apparatus 10 will be described. Fig. 4 is a block diagram illustrating a configuration of the imaging control apparatus of the first embodiment. A block diagram of a part of the configuration of the microscope apparatus 10 that is controlled by each unit of the imaging control apparatus 20 is illustrated.

The imaging control apparatus 20 controls the entire microscope apparatus 10 and comprises the auto-focus control unit 21, a scanning control unit 22, a processing control unit 23, and a display control unit 24.

The imaging control apparatus 20 is configured with a computer that comprises a central processing apparatus, a semiconductor memory, a hard disk, and the like. An observation apparatus control program according to one embodiment of the present invention is installed on the hard disk. The auto-focus control unit 21, the scanning control unit 22, the processing control unit 23, and the display control unit 24 illustrated in Fig. 4 function by causing the central processing apparatus to execute the observation apparatus control program.

As described above, the auto-focus control unit 21 controls the image-forming optical system drive unit 15 based on the Z-directional positional information of the cultivation container 50 detected by the detection unit 18. By driving of the image-forming optical system drive unit 15, the objective lens 14b of the image-forming optical system 14 is moved in the optical axis direction, and the auto-focus control is performed.

The scanning control unit 22 moves the stage 51 in the X direction and the Y direction by controlling driving of the horizontal drive unit 17. The horizontal drive unit 17 is configured with an actuator that includes a piezoelectric element and the like.

Hereinafter, movement control of the stage 51 by the scanning control unit 22 and the auto-focus control performed by the auto-focus control unit 21 will be described in detail.

In the present embodiment, the stage 51 is moved in the X direction and the Y direction under control of the scanning control unit 22. The image-forming optical system 14 two-dimensionally scans the inside of the cultivation container 50. The phase difference image of each observation position formed by the image-forming optical system 14 is captured. Fig. 5 is a diagram illustrating a scanning position of the observation position in the cultivation container 50 by a solid line M. In the present embodiment, a well plate that includes six wells W is used as the cultivation container 50.

As illustrated in Fig. 5, the image-forming optical system 14 is moved along the solid line M from a scanning start point S to a scanning end point E. That is, the observation position scanned by the image-forming optical system 14 on the cultivation container 50 is scanned in the positive direction (rightward direction in Fig. 5) of the X direction, then is moved in the Y direction (downward direction in Fig. 5), and is scanned in the opposite negative direction (leftward direction in Fig. 5). Next, the observation position is moved again in the Y direction and is scanned again in the positive direction. The image-forming optical system 14 two-dimensionally scans the inside of the cultivation container 50 by repeating the reciprocating movement in the X direction and the movement in the Y direction.

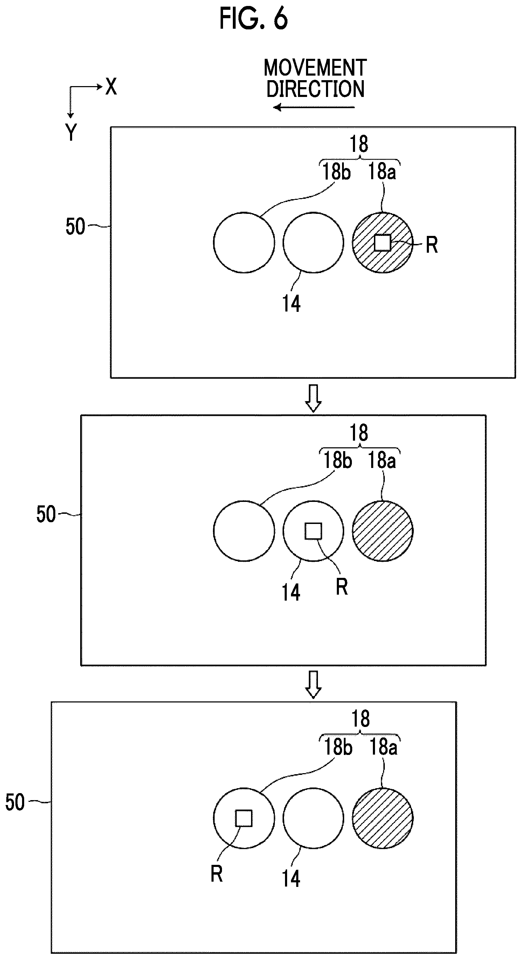

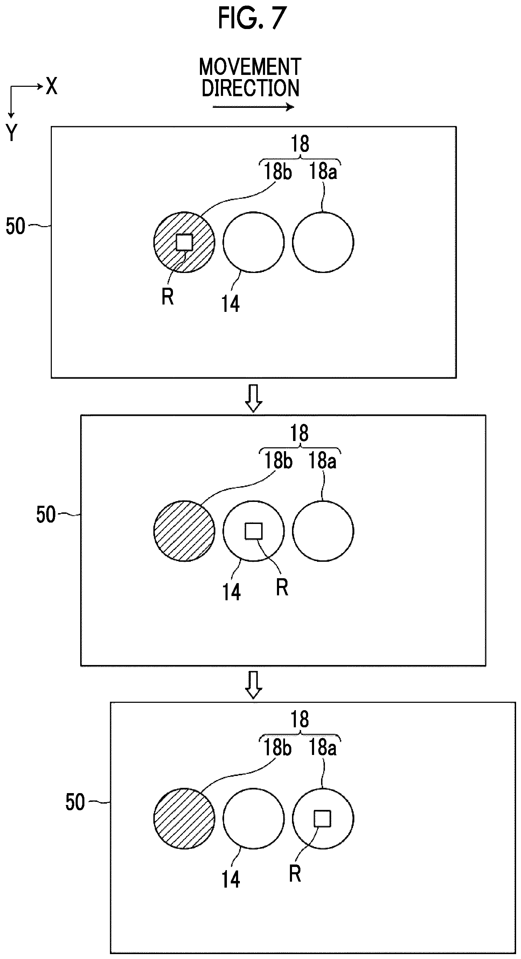

Fig. 6 and Fig. 7 are diagrams illustrating a positional relationship among the image-forming optical system 14, the first displacement sensor 18a, the second displacement sensor 18b, and the cultivation container 50 in a case where an observation position R is present at any position in the cultivation container 50.

In the present embodiment, as illustrated in Fig. 6 and Fig. 7, the first displacement sensor 18a and the second displacement sensor 18b are arranged in the X direction with the image-forming optical system 14 interposed therebetween. As described above, the cultivation container 50 is two-dimensionally scanned. At this point, the Z-directional position of the cultivation container 50 at the observation position R is precedently detected with respect to the image-forming optical system 14 in the movement direction (that is, the main scanning direction) before the observation position R in the cultivation container 50 reaches the image-forming optical system 14. Specifically, in a case where the observation position R is moving in an arrow direction illustrated in Fig. 6 (leftward direction in Fig. 6), the Z-directional position of the cultivation container 50 at the observation position R is detected by the first displacement sensor 18a that precedes the image-forming optical system 14 in the main scanning direction between the first displacement sensor 18a and the second displacement sensor 18b. In Fig. 6, the first displacement sensor 18a is illustrated with diagonal lines. In a case where the observation position R is moved to the position of the image-forming optical system 14, the auto-focus control is performed using the previously detected Z-directional positional information of the cultivation container 50, and the phase difference image is captured. In the present embodiment, after the capturing of the phase difference image, the Z-directional position of the cultivation container 50 at the observation position R is also detected by the second displacement sensor 18b that succeeds the image-forming optical system 14 in the main scanning direction. In this case, the detected position of the first displacement sensor 18a corresponds to a first position, and the detected position of the second displacement sensor 18b corresponds to a second position.

Meanwhile, in a case where the observation position R is moving in an arrow direction illustrated in Fig. 7 (rightward direction in Fig. 7), the Z-directional position of the cultivation container 50 at the observation position R is detected by the second displacement sensor 18b that precedes the image-forming optical system 14 in the main scanning direction between the first displacement sensor 18a and the second displacement sensor 18b. In Fig. 7, the second displacement sensor 18b is illustrated with diagonal lines. In a case where the observation position R is moved from the position illustrated in Fig. 7 to the position of the image-forming optical system 14, the auto-focus control is performed using the previously detected Z-directional positional information of the cultivation container 50, and the phase difference image is captured. In the present embodiment, after the capturing of the phase difference image, the Z-directional position of the cultivation container 50 at the observation position R is also detected by the first displacement sensor 18a that succeeds the image-forming optical system 14 in the main scanning direction. In this case, the detected position of the second displacement sensor 18b corresponds to the first position, and the detected position of the first displacement sensor 18a corresponds to the second position.

The positional information representing the Z-directional position of the cultivation container 50 detected by the first and second displacement sensors 18a and 18b is associated with the X-Y coordinates of each observation position R and is stored in the semiconductor memory or the hard disk, not illustrated, in the imaging control apparatus 20.

By switching between the detection of the Z-directional position of the cultivation container 50 using the first displacement sensor 18a and the detection of the Z-directional position of the cultivation container 50 using the second displacement sensor 18b in accordance with a change of the main scanning direction, the Z-directional positional information of the cultivation container 50 at the position of the observation position R can be always precedently acquired with respect to the capturing of the phase difference image of the observation position R.

The auto-focus control unit 21 performs an auto-focus control by controlling driving of the image-forming optical system drive unit 15 based on the Z-directional positional information of the cultivation container 50 precedently detected with respect to the image-forming optical system 14 as described above. Specifically, a relationship between the Z-directional positional information of the cultivation container 50 and the movement amount of the image-forming optical system 14 in the optical axis direction is set in advance in the auto-focus control unit 21. The auto-focus control unit 21 obtains the movement amount of the image-forming optical system 14 in the optical axis direction based on the input Z-directional positional information of the cultivation container 50, and outputs the control signal corresponding to the movement amount to the image-forming optical system drive unit 15. The image-forming optical system drive unit 15 is driven based on the input control signal. Accordingly, the image-forming optical system 14 (objective lens 14b) moves in the optical axis direction, and focus adjustment corresponding to the Z-directional position of the cultivation container 50 is performed.

In the present embodiment, as described above, the Z-directional position of the cultivation container 50 is detected in advance with respect to each observation position R. Thus, a detection timing of the position of the cultivation container 50 at each observation position R and an imaging timing of the phase difference image are temporally shifted. Accordingly, the movement of the image-forming optical system 14 (objective lens 14b) in the Z direction, that is, the auto-focus control, is performed after the position of the cultivation container 50 is detected by the first displacement sensor 18a or the second displacement sensor 18b and before the observation position R reaches the detected position.

In a case where the timing of the auto-focus control is too early, there is a possibility that the Z-directional position of the cultivation container 50 is shifted due to any cause after the auto-focus control and before the observation position R reaches the detected position, and the focus position may be shifted.

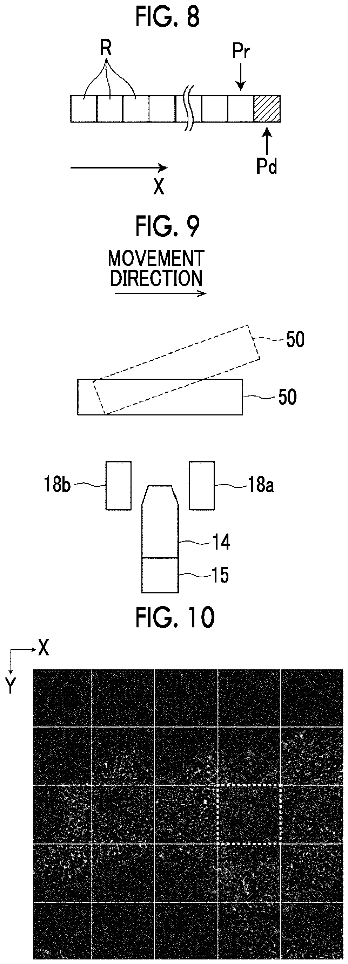

Accordingly, it is desirable that the timing of the auto-focus control is a timing immediately before the observation position R reaches the detected position and is a timing at which the capturing of the phase difference image at the detected position is timely performed. For example, as illustrated in Fig. 8, in a case where the observation position R sequentially moves in the X direction, and the detected position of the detection unit 18 is a position of Pd illustrated by a diagonal line, it is preferable that the timing immediately before the observation position R reaches the detected position is from a time point at which the observation position R passes through a position Pr of the observation position R adjacent to the detected position Pd until the observation position R reaches the detected position Pd. The auto-focus control may be performed at a time point at which the observation position R reaches the detected position Pd.

In the present embodiment, a time period from the detection timing of the first or second displacement sensor 18a or 18b until the timing of the auto-focus control using the positional information of the detected position is preset such that the timing of the auto-focus control is a desirable timing as described above.

For example, in a case where the movement speed of the stage 51 is changed by changing the magnification of the phase difference lens 14a, the preset time period may be changed in accordance with the change of the movement speed of the stage 51. Alternatively, instead of changing the time period, the distance between the first displacement sensor 18a or the second displacement sensor 18b and the image-forming optical system 14 may be changed by moving the first displacement sensor 18a or the second displacement sensor 18b in the X direction in a case where the movement speed of the stage 51 is changed.

As in the present embodiment, in a case where the position of the cultivation container 50 is precedently detected with respect to the capturing of the phase difference image by arranging the first displacement sensor 18a and the second displacement sensor 18b in the X direction with the image-forming optical system 14 interposed therebetween, it is necessary to relatively move the image-forming optical system 14, the first displacement sensor 18a, and the second displacement sensor 18b to ranges R1 and R2 on the outer sides of the range of the cultivation container 50 in the X direction as illustrated in Fig. 5 in order to detect the position of the cultivation container 50 and capture the phase difference image in the entire range of the cultivation container 50. At least an interval between the first displacement sensor 18a and the image-forming optical system 14 in the X direction needs to be secured as the width of the range R1 in the X direction. At least an interval between the second displacement sensor 18b and the image-forming optical system 14 in the X direction needs to be secured as the width of the range R2 in the X direction. In order to reduce the scanning time period of the observation position R as far as possible, it is preferable to reduce the scanning range of the observation position R as far as possible. Accordingly, the width of the range R1 in the X direction is preferably the interval between the first displacement sensor 18a and the image-forming optical system 14 in the X direction, and the width of the range R2 in the X direction is preferably the interval between the second displacement sensor 18b and the image-forming optical system 14 in the X direction.

In a case where the observation position R is scanned in the range of the cultivation container 50 by moving the stage 51 in the X direction, it is preferable that the movement speed of the observation position R in the range of the cultivation container 50 is constant. Accordingly, when the movement of the stage 51 in the X direction is started, it is necessary to accelerate the stage 51 to a constant speed. When the movement of the stage 51 in the X direction is ended, it is necessary to decelerate the stage 51 from the constant speed and stop the stage 51.

In a case where the movement speed of the stage 51 in the X direction is set to the constant speed, the movement speed can be rapidly controlled to the constant speed almost without an acceleration region. However, in a case where such a control is performed, the liquid level of a cultivation liquid or the like accommodated in the cultivation container 50 along with the cell fluctuates, and the image quality of the phase difference image may be decreased. In addition, the same problem may occur in the stopping of the stage 51.

Therefore, in the present embodiment, the range R1 and the range R2 illustrated in Fig. 5 are set as acceleration and deceleration regions of the movement of the stage 51 in the X direction. By setting the acceleration and deceleration regions on both sides of the range of the cultivation container 50 in the X direction, the observation position R can be scanned at the constant speed in the range of the cultivation container 50 without unnecessarily increasing the scanning range. Furthermore, fluctuation of the liquid level of the cultivation liquid described above can be reduced.

Returning to Fig. 4, the processing control unit 23 calculates the absolute value of the difference value between the Z-directional position of the cultivation container 50 detected by the first displacement sensor 18a and the Z-directional position of the cultivation container 50 detected by the second displacement sensor 18b at a target observation position R0 as a processing target. A determination as to whether or not the calculated absolute value of the difference value is greater than a predetermined threshold value Th1 is performed. Fig. 9 is a diagram illustrating a Z-directional positional relationship between the cultivation container 50 and the first and second displacement sensors 18a and 18b. In Fig. 9, it is assumed that the cultivation container 50 is moving in the rightward direction. In this case, with respect to a certain observation position R, first, the Z-directional position of the cultivation container 50 is detected by the second displacement sensor 18b for the auto-focus control. Then, the Z-directional position of the cultivation container 50 is detected by the first displacement sensor 18a.

When detection is performed by the second displacement sensor 18b, the cultivation container 50 is not inclined as illustrated by a solid line in Fig. 9. However, after the detection performed by the second displacement sensor 18b, the cultivation container 50 may be inclined as illustrated by a broken line in Fig. 9 due to occurrence of vibration or the effect of the accuracy and the like of the horizontal drive unit 17. In such a case, the Z-directional position of the cultivation container 50 detected by the second displacement sensor 18b is different from the Z-directional position of the cultivation container 50 detected by the first displacement sensor 18a. In such a state, the absolute value of the difference value between the Z-directional position of the cultivation container 50 detected by the first displacement sensor 18a and the Z-directional position of the cultivation container 50 detected by the second displacement sensor 18b is increased.

In a state where the calculated absolute value of the difference value is high, focus may not be set, and the image at the observation position R may be blurred even in a case where the auto-focus control is performed at the observation position R based on the Z-directional position of the cultivation container 50 detected by the displacement sensor preceding the image-forming optical system 14 at the time of scanning.

In a case where it is determined that the calculated absolute value of the difference value is greater than the threshold value Th1, the processing control unit 23 controls a process for observation of the target observation position R0. Specifically, at least one of imaging of the target observation position or image processing on the image of the target observation position is controlled. Hereinafter, the control of the imaging and the image processing will be described.

First, the control of the capturing will be described. The processing control unit 23 re-images the target observation position R0 for which it is determined that the absolute value of the difference value is greater than the threshold value Th1. The absolute value of the difference value being greater than the threshold value Th1 means that the possibility of focus not being set at the target observation position R0 is high, and the possibility of blurriness of the phase difference image of the target observation position R0 is high. Thus, the processing control unit 23 re-images the target observation position R0 by providing an instruction to the microscope apparatus 10 such that focus is appropriately set at the target observation position R0. The Z-directional positional information of the cultivation container 50 is stored in association with the X-Y coordinates of the observation position R as described above. Thus, the position of the target observation position R0 can be easily specified.

In a case where it is determined that the calculated absolute value of the difference value is greater than the threshold value Th1, the processing control unit 23 may perform notification that the possibility of blurriness of the target observation position R0 is high. Specifically, in the present embodiment, as will be described later, the display control unit 24 displays a composite image in which a plurality of phase difference images are linked and composited on a display apparatus 30. In the composite image displayed on the display apparatus 30, the notification may be performed by displaying the phase difference image of an observation region in which the calculated absolute value of the difference value is greater than the threshold value Th1 in a highlighted manner. For example, in a composite image illustrated in Fig. 10, it is assumed that the calculated absolute value of the difference value is greater than the threshold value Th1 in an observation region surrounded by a dotted line. In this case, the phase difference image of the region may be displayed in a highlighted manner by providing a frame of red or the like in the region surrounded by the dotted line, turning on and off the frame, or turning on and off the region. The notification may also be performed using a text or audio.

Next, the control of the image processing will be described. In a case where it is determined that the calculated absolute value of the difference value is greater than the threshold value Th1, the processing control unit 23 performs a sharpness enhancement process on the phase difference image of the target observation position R0. Specifically, the sharpness enhancement process is performed by changing the enhancement level of sharpness in accordance with the magnitude of the calculated absolute value of the difference value. In the present embodiment, a table in which values of various difference values and enhancement levels of sharpness are associated is stored in the hard disk of the imaging control apparatus 20. The processing control unit 23 performs the sharpness enhancement process on the phase difference image of the target observation position R0 by referring to the table and acquiring the enhancement level of sharpness corresponding to the value of the difference value.

Next, returning to Fig. 4, the display control unit 24 generates one composite phase difference image by joining the phase difference image of each observation position R imaged by the microscope apparatus 10, and displays the composite phase difference image on the display apparatus 30. In a case where the observation position is re-imaged, the composite phase difference image is generated using the phase difference image acquired by re-imaging. In a case where the sharpness enhancement process is performed on the phase difference image of the observation position, the composite phase difference image is generated using the processed phase difference image.

The display apparatus 30 displays the composite phase difference image generated by the display control unit 24 as described above and comprises, for example, a liquid crystal display. The display apparatus 30 may be configured with a touch panel and double as an input apparatus 40.

The input apparatus 40 comprises a mouse, a keyboard, and the like and receives various setting inputs from the user. The input apparatus 40 of the present embodiment receives setting inputs such as an instruction to change the magnification of the phase difference lens 14a and an instruction to change the movement speed of the stage.

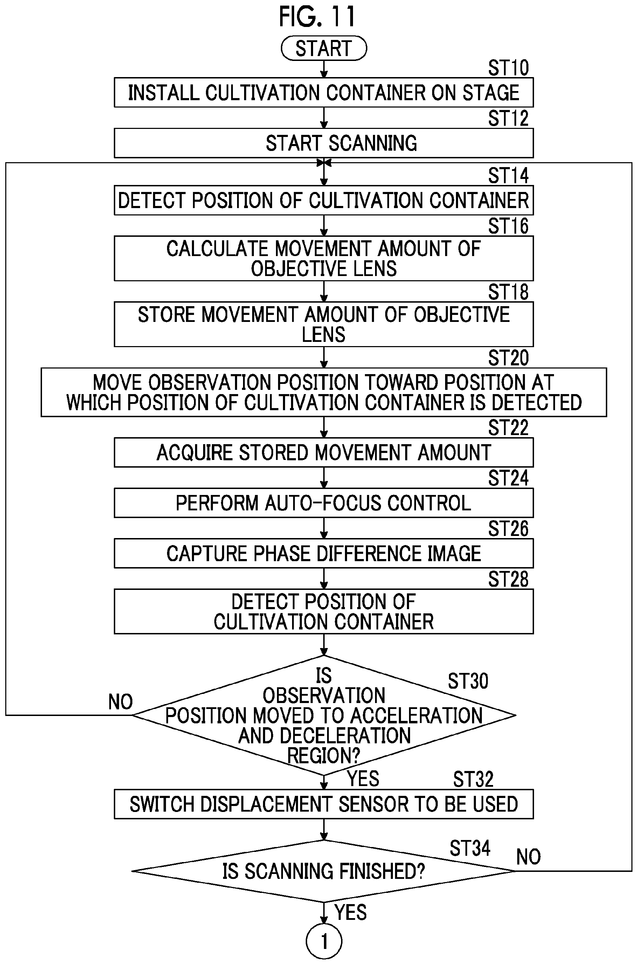

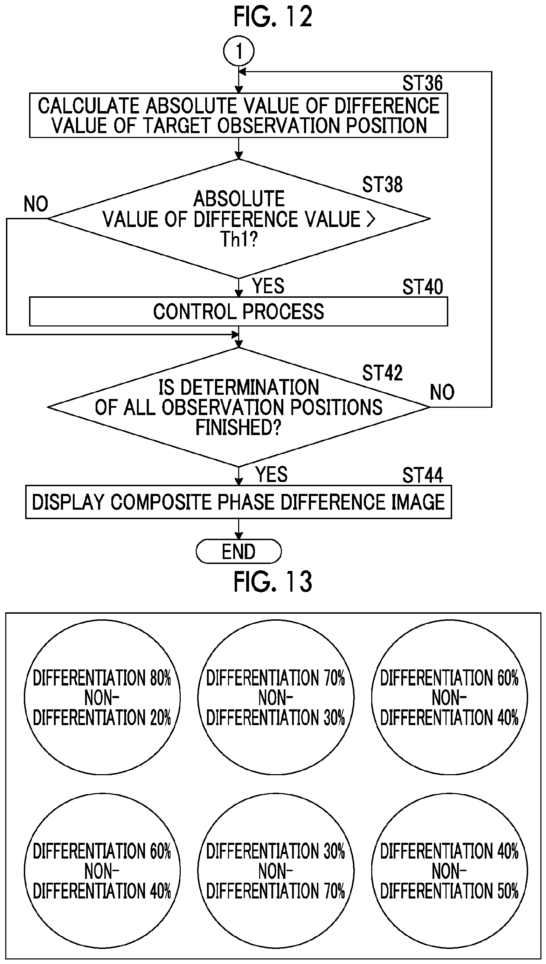

Next, a process performed by the microscope observation system of the present embodiment will be described. Fig. 11 and Fig. 12 are flowcharts illustrating a process performed in the first embodiment. First, the cultivation container 50 accommodating the cell as the observation target is installed on the stage 51 (step ST10). Next, the image-forming optical system 14 is set at the position of the scanning start point S illustrated in Fig. 5 by moving the stage 51, and the scanning of the cultivation container 50 is started (step ST12).

In the present embodiment, as described above, the Z-directional position of the cultivation container 50 is precedently detected with respect to imaging for each observation position R, and the phase difference image is captured at a time point at which the observation position R reaches the detected position. The detection of the position of the cultivation container 50 and the capturing of the phase difference image are performed while the cultivation container 50 is scanned. The capturing of the phase difference image of a certain observation position R is performed in parallel with the detection of the Z-directional position of the cultivation container 50 corresponding to the observation position R before the capturing of the observation position R.

Specifically, in a case where the cultivation container 50 is moving in the arrow direction in Fig. 6, the Z-directional position of the cultivation container 50 is detected by the first displacement sensor 18a (step ST14), and the detected positional information is acquired by the auto-focus control unit 21. The auto-focus control unit 21 calculates the movement amount of the objective lens 14b based on the acquired Z-directional positional information of the cultivation container 50 (step ST16) and stores the movement amount of the objective lens 14b in association with the position of the X-Y coordinates of the detected position of the cultivation container 50 (step ST18). At this point, the Z-directional positions of the cultivation container 50 detected by the first displacement sensor 18a and the second displacement sensor 18b are also stored in association with the position of the X-Y coordinates of the detected position of the cultivation container 50.

Next, the observation position R is moved toward the position at which the position of the cultivation container 50 is detected by the first displacement sensor 18a in step ST14 (step ST20). The auto-focus control unit 21 acquires the movement amount of the objective lens 14b stored immediately before the observation position R reaches the position at which the position of the cultivation container 50 is detected, and performs the auto-focus control based on the acquired movement amount (steps ST22 and ST24). That is, the auto-focus control unit 21 controls driving of the image-forming optical system drive unit 15 based on the movement amount stored in advance and moves the objective lens 14b in the Z direction. After the auto-focus control, the phase difference image is captured at a time point at which the observation position R reaches the position at which the position of the cultivation container 50 is detected (step ST26). The phase difference image of the observation position R is output to the display control unit 24 from the imaging element 16 and is stored. As described above, while the phase difference image of the observation position R is captured in step ST26, the position of the cultivation container 50 is detected in parallel by the displacement sensor preceding each observation position R in the scanning direction.

Next, in step ST28, the target observation position R0 moves to the position of the second displacement sensor 18b. The Z-directional position of the cultivation container 50 at the target observation position R0 is detected by the second displacement sensor 18b and is stored in association with the position of the X-Y coordinates of the detected position of the cultivation container 50.

In a case where the observation position R of the image-forming optical system 14 moves to the range R2 of the acceleration and deceleration region illustrated in Fig. 5, moves in the Y direction, and then, is scanned in the direction opposite to the X direction (YES in step ST30), that is, in a case where the main scanning direction is changed from the arrow direction in Fig. 6 to the arrow direction in Fig. 7, the displacement sensor to be used for the auto-focus control is switched from the first displacement sensor 18a to the second displacement sensor 18b (step ST32). In a case where a negative determination is made in step ST30, the detection of the position of the cultivation container 50 and the capturing of the phase difference image are sequentially performed (step ST14 to step ST28).

In a case where the entire scanning is not finished (NO in step ST34), the observation position R moves in the X direction again, and the detection of the position of the cultivation container 50 and the capturing of the phase difference image are sequentially performed (step ST14 to step ST28).

Each time the observation position R moves to the ranges R1 and R2 of the acceleration and deceleration regions, the displacement sensor to be used is switched. The processes of step ST14 to step ST28 are repeated until the entire scanning is finished. The entire scanning is finished at a time point at which the observation position R reaches the position of the scanning end point E illustrated in Fig. 5 (YES in step ST34).

After the entire scanning is finished, the processing control unit 23 calculates the absolute value of the difference value between the Z-directional position of the cultivation container 50 detected by the first displacement sensor 18a and the Z-directional position of the cultivation container 50 detected by the second displacement sensor 18b for the target observation position R0 among a plurality of observation positions (step ST36). A determination as to whether or not the calculated absolute value of the difference value is greater than the threshold value Th1 is performed (step ST38).

In a case where a positive determination is made in step ST38, the processing control unit 23 controls the process for observation of the target observation position R0 (step ST40). Specifically, the re-imaging of the target observation position R0, the notification that the possibility of blurriness of the phase difference image of the target observation position R0 is high, or the sharpness enhancement process on the phase difference image of the target observation position R0 is performed. In a case where a negative determination is made in step ST38, a transition is made to a process of step ST42.

The processes of steps ST36 to ST40 are repeated until the determination of all observation positions R is finished (NO in step ST42). In a case where the determination of all observation positions R is finished (YES in step ST42), the display control unit 24 generates the composite phase difference image by linking and compositing all phase difference images, displays the generated composite phase difference image on the display apparatus 30 (step ST44), and finishes the process.

In the present embodiment, the auto-focus control is performed based on a first position of the cultivation container 50 in the vertical direction at the target observation position R0. The first position is detected by the displacement sensor preceding the target observation position R0 in the main scanning direction before the image-forming optical system 14 reaches the target observation position in the cultivation container 50. Thus, the auto-focus control can be performed at a high speed.

In addition, the process for observation of the target observation position R0 is controlled based on the vertical directional position of the cultivation container 50 detected by the first and second displacement sensors 18a and 18b at the target observation position R0. Thus, even in a case where the vertical directional position of the cultivation container 50 is changed due to vibration and the like after the detection by the displacement sensor preceding in the main scanning direction, the change can be detected by the displacement sensor succeeding in the main scanning direction. Accordingly, the phase difference image of the target observation position R0 on which the control for observation is performed can be used, and the observation target can be evaluated with accuracy and high reliability.

Next, a second embodiment of the present invention will be described. A configuration of a microscope observation system using an imaging control apparatus, a method, and a program according to the second embodiment of the present invention is the same as the configuration of the microscope observation system using the first embodiment illustrated in Fig. 1, and only the process performed by the processing control unit 23 is different. Thus, the configuration will not be described.

In the first embodiment, in a case where it is determined that the calculated absolute value of the difference value is greater than the threshold value Th1, the process for observation of the target observation position R0 is controlled. Specifically, at least one of the imaging of the target observation position or the image processing on the image of the target observation position is controlled. The second embodiment is different from the first embodiment in that the processing control unit 23 further evaluates the state of the cell included in the phase difference image of the target observation position R0 and changes an evaluation method for the phase difference image depending on whether or not the calculated absolute value of the difference value is greater than the threshold value Th1. Hereinafter, the evaluation of the image will be described.

In the second embodiment, the processing control unit 23 controls the process for observation of the target observation position R0 by evaluating the state of the cell included in the phase difference image of each observation position R. For example, the evaluation of the state of the cell refers to evaluation as to whether the cell included in the phase difference image is an undifferentiated cell or a differentiated cell, counting of the number of cells for each type of cell in co-culture, evaluation of the ratio of the undifferentiated cells and the differentiated cells included in the phase difference image, evaluation of the growth level of the cell or a cell colony, or evaluation of the reduction rate of cancer cells by an anti-cancer drug. However, the evaluation of the state of the cell is not for limitation purposes, and other evaluation may be used.

In a case where the calculated difference value is greater than the threshold value Th1, the phase difference image is blurred, or the possibility of blurriness is high. In a case where the difference value is less than or equal to the threshold value, the phase difference image is not blurred, or the possibility of non-blurriness is high. The processing control unit 23 in the second embodiment evaluates the state of the cell using different evaluation methods for a blurred phase difference image (absolute value of difference value > Th1; hereinafter, includes a phase difference image for which the possibility of blurriness is high) and a non-blurred phase difference image (absolute value of difference value ≤ Th1; hereinafter, includes a phase difference image for which the possibility of non-blurriness is high). Specifically, the processing control unit 23 evaluates the non-blurred phase difference image using a feature amount indicating the state of the cell included in the phase difference image, and evaluates the blurred phase difference image using an image feature amount.

In the non-blurred phase difference image, an image of the cell included in the phase difference image or an image of a microstructure of the cell such as a nucleus or a nucleolus can be recognized with high accuracy. Thus, as described above, by performing evaluation using the feature amount indicating the state of the cell, an evaluation result having an excellent biological interpretability can be obtained. In other words, the evaluation method using the feature amount indicating the state of the cell is an evaluation method that is relatively susceptible to blurriness (degradation).

As the feature amount indicating the state of the cell, at least one of a feature amount of the state of each individual cell, a feature amount of the nucleolus included in the cell, a feature amount of a white streak, a feature amount of the nucleus included in the cell, or the NC ratio of the cell can be used.

As the feature amount of the state of each individual cell, for example, the number of cells, the density of the cells, the increase rate of the cells, and the circularity of the cell are present. Other feature amounts may be used as long as each individual cell included in the phase difference image is recognized and the feature amounts are calculated based on the recognized cells. As a recognition method for the cell included in the phase difference image, for example, a method of detecting the edges of the image of the cell, detection using a pattern matching process, or detection using a discriminator generated by machine learning is present. Other well-known methods can be used. With respect to the circularity of the cell, the undifferentiated cell has a relatively high circularity, and the differentiated cell has, for example, an elongated shape and a relatively low circularity. Accordingly, evaluation of the differentiated cell or the undifferentiated cell can be performed by calculating the circularity of each individual cell. In addition, in a pluripotent stem cell, in a case where the cell is differentiated, a chromatin structure in the nucleus changes and becomes dark. Thus, differentiation or non-differentiation can be evaluated by detecting the nucleus and then, evaluating the brightness of the nucleus. The method of evaluating the differentiated cell or the undifferentiated cell is not for limitation purposes. Other well-known methods can be used. In a case where a neuron is evaluated, the length of a dendrite can be used as the feature amount indicating the state of each individual cell. By using the length of the dendrite, the growth level of the neuron can be evaluated.

As the feature amount of the nucleus or the nucleolus included in the cell, for example, the number of nuclei or nucleoli, the density of the nuclei or nucleoli, and the increase rate of the nuclei or nucleoli are present. Other feature amounts may be used as long as the nucleus or the nucleolus included in the phase difference image is recognized and the feature amounts are calculated based on the recognized nucleus or nucleolus. As a recognition method for the nucleus or the nucleolus included in the phase difference image, the edge detection, the detection by pattern matching, the detection using the discriminator, and the like can be used in the same manner as the recognition method for the cell.

The white streak is blurring of light (halo) caused by diffractive light generated between the cell and a background. As the feature amount of the white streak, for example, the total area of the white streak, the density of the white streak, a distribution state of the white streak are present. Other feature amounts may be used as long as the white streak included in the phase difference image is recognized and the feature amounts are calculated based on the recognized white streak. As a recognition method for the white streak, for example, the phase difference image may be binarized, and the white streak may be extracted by a threshold value process. Alternatively, a method of detection using the pattern matching process or detection using the discriminator generated by machine learning is present. Other well-known methods can be used. With respect to the feature amount of the white streak, for example, the amount of the white streak is small in a state where a large number of undifferentiated cells are present in the cell colony. The amount of the white streak is increased as the number of differentiated cells is increased along with differentiation. Accordingly, the differentiation level or the non-differentiation level of the cell colony, the growth level of the cell colony, or the like can be evaluated based on the feature amount of the white streak.

The NC ratio of the cell is a nucleus/cytoplasm area ratio. The NC ratio can be obtained using a detector for each of the cytoplasm and the nucleus. The cytoplasm generally looks gray and flat, and the nucleus is relatively round and has a structure such as the nucleolus. Accordingly, a cytoplasm region and a nucleus region are obtained by creating the detectors by machine learning and applying the detectors to the phase difference image. By calculating the ratio of the areas of the obtained cytoplasm region and nucleus region, the NC ratio can be calculated. The NC ratio may be calculated in units of cell colonies. Alternatively, the NC ratio in a predesignated region may be calculated.

With respect to the blurred phase difference image, the detection accuracy of the image of each individual cell, the image of the nucleolus, and the like is decreased. Accordingly, evaluation using the image feature amount of the phase difference image improves evaluation accuracy compared to evaluation using the feature amount indicating the state of each individual cell as in the non-blurred phase difference image. The evaluation method using the image feature amount is an evaluation method that is relatively more insusceptible to blurriness (degradation) than the evaluation method using the feature amount indicating the state of the cell.

The image feature amount used in the evaluation of the blurred phase difference image is the feature amount of the captured image. Specifically, the average brightness of the phase difference image, a variance of the brightness of the phase difference image, the difference between the maximum value and the minimum value of the brightness of the phase difference image, the contrast of the phase difference image, the entropy of the phase difference image, a spatial frequency distribution of the phase difference image, the directivity of the phase difference image, a Zernike feature of the phase difference image, and the like can be used.

As a method of evaluating the state of the cell included in the phase difference image using such an image feature amount, for example, a relationship between the image feature amount and an evaluation result corresponding to the image feature amount may be obtained in advance by experiment or the like, and the evaluation result may be obtained based on the image feature amount of the phase difference image and the relationship. In addition, for example, an evaluator may be generated by learning the relationship between the image feature amount and the evaluation result corresponding to the image feature amount using machine learning, and the evaluation result may be obtained by inputting the image feature amount of the phase difference image into the evaluator.

The processing control unit 23 of the second embodiment calculates the evaluation result of the well by combining the evaluation result of the phase difference image of each observation region in the well. That is, the evaluation result in units of wells is calculated. By calculating the evaluation result in units of wells (in units of containers), management can be performed in units of wells in subculturing or shipment of the cell.

In the second embodiment, as described above, the state of the cell is evaluated using different evaluation methods for the blurred phase difference image and the non-blurred phase difference image. Thus, the phase difference image of each observation region can be evaluated using an appropriate evaluation method, and an accurate and reliable evaluation result can be obtained as the evaluation result in units of wells.

Specifically, for example, the ratio of differentiated cells and the ratio of undifferentiated cells in units of wells may be obtained by calculating the average values of the ratio of differentiated cells and the ratio of undifferentiated cells included in the phase difference image of each observation region in the well.

In a case where the growth level of the cell or the cell colony is evaluated with respect to the phase difference image of each observation region in the well, the average value of the growth level of each observation region may be obtained as the growth level in units of wells. In addition, the ratio of the number of observation regions in which the growth level is greater than or equal to a threshold value among all observation regions in the well may be calculated, and the ratio may be obtained as the growth level in units of wells. In a case where the ratio is greater than or equal to a threshold value, the evaluation result in units of wells may be set as "good". In a case where the ratio is less than the threshold value, the evaluation result in units of wells may be set as "bad". Alternatively, the evaluation result of the observation region in which the growth level is greater than or equal to the threshold value may be set as "good", and the evaluation result of the observation region in which the growth level is less than the threshold value may be set as "bad". In a case where the number of observation regions having the evaluation result "good" in the well is greater than or equal to the threshold value, the evaluation result in units of wells may be set as "good". In a case where the number is less than the threshold value, the evaluation result in units of wells may be set as "bad".

In the second embodiment, the display control unit 24 displays the evaluation result of the processing control unit 23 on the display apparatus 30. Specifically, in the second embodiment, the evaluation result in units of wells is calculated in the processing control unit 23 as described above. Thus, the display control unit 24 displays the evaluation result in units of wells on the display apparatus 30. Fig. 13 is an example in which the ratio of differentiated cells and the ratio of undifferentiated cells in units of wells are calculated and displayed as a combined evaluation result in a case where a well plate having six wells is used.

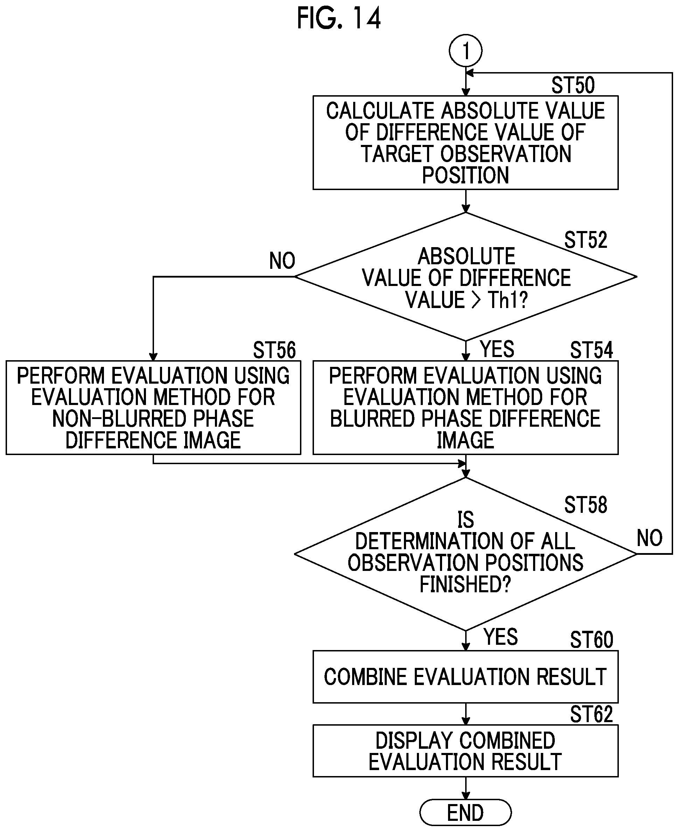

Next, a process performed in the second embodiment will be described. Fig. 14 is a flowchart illustrating the process performed in the second embodiment In the second embodiment, the same process as the first embodiment is performed up to step ST34 in the first embodiment. Thus, only processes after step ST34 in the first embodiment are illustrated in Fig. 14. After step ST34 in the first embodiment, the processing control unit 23 calculates the absolute value of the difference value between the Z-directional position of the cultivation container 50 detected by the first displacement sensor 18a and the Z-directional position of the cultivation container 50 detected by the second displacement sensor 18b for the target observation position R0 among the plurality of observation positions (step ST50). A determination as to whether or not the calculated absolute value of the difference value is greater than the threshold value Th1 is performed (step ST52).

In a case where a positive determination is made in step ST52, the processing control unit 23 evaluates the phase difference image of the target observation position R0 using the evaluation method for the blurred phase difference image (step ST54). Specifically, the image feature amount is calculated for the phase difference image, and the state of the cell included in the phase difference image is evaluated using the image feature amount.

In a case where a negative determination is made in step ST52, the processing control unit 23 evaluates the phase difference image of the target observation position R0 using the evaluation method for the non-blurred phase difference image (step ST56). Specifically, the feature amount indicating the state of the cell is calculated for the phase difference image, and the state of the cell included in the phase difference image is evaluated using the feature amount.

The processes of ST50 to ST56 are repeated until the evaluation of the phase difference images of all observation positions is finished (NO in step ST58). In a case where the evaluation of all observation positions is finished (YES in step ST58), the processing control unit 23 combines the evaluation result of the phase difference image of each observation position in units of wells and acquires the evaluation result in units of wells (step ST60). The display control unit 24 generates the composite phase difference image using the phase difference image of each observation position, displays the composite phase difference image on the display apparatus 30, displays the combined evaluation result in units of wells on the display apparatus 30 (step ST62), and finishes the process.

In the second embodiment, the evaluation method for the phase difference image is changed depending on whether or not the calculated absolute value of the difference value is greater than the threshold value Th1. Specifically, in the evaluation of the state of the cell included in the phase difference image, the blurred phase difference image and the non-blurred phase difference image are evaluated using different evaluation methods. Thus, the phase difference image can be evaluated using an evaluation method appropriate for the phase difference image, and the evaluation can be performed with higher accuracy and high reliability.

In the second embodiment, the phase difference image of each observation position in the well is composited, and the evaluation result in units of wells is calculated in the processing control unit 23. In the calculation of the combined evaluation result, a weight may be applied to the evaluation result of the blurred phase difference image and the evaluation result of the non-blurred phase difference image. The weight is preferably set such that the weight applied to the evaluation result of the non-blurred phase difference image is greater than the weight applied to the evaluation result of the blurred phase difference image. Such setting is performed because the accuracy of the evaluation result of the non-blurred phase difference image is considered to be higher.

Specifically, for example, in a case where the average value of the growth level of each observation region in the well is obtained as the growth level in units of wells, a weight less than 0.5 may be applied to the growth level of the observation region of the blurred phase difference image, and a weight greater than or equal to 0.5 may be applied to the growth level of the observation region of the non-blurred phase difference image.

In a case where the evaluation result of the observation region in which the growth level is greater than or equal to a predetermined threshold value is set as "good", and the evaluation result of the observation region in which the growth level is less than the threshold value is set as "bad", the growth level of the observation position of the blurred phase difference image may be evaluated as "good" or "bad" by applying a weight less than 0.5 to the growth level. The growth level of the observation position of the non-blurred phase difference image may be evaluated as "good" or "bad" by applying a weight greater than or equal to 0.5 to the growth level. Then, as described above, in a case where the number of observation positions having the evaluation result "good" in the well is greater than or equal to a certain value, the evaluation result in units of wells may be set as "good". In a case where the number is less than the certain value, the evaluation result in units of wells may be set as "bad".

In the second embodiment, in a case where the calculated absolute value of the difference value is greater than the threshold value Th1, the evaluation method may be changed by excluding the phase difference image of the observation position R from an evaluation target. In this case, the phase difference image of the observation position R is excluded from the evaluation target in the calculation of the evaluation result.

In the above embodiments, the stage 51 is moved but is not for limitation purposes. The stage 51 may be fixed, and the image-forming optical system 14 and other configurations related to the capturing of the phase difference image may be moved. Alternatively, all of the stage 51, the image-forming optical system 14, and the other configurations related to the capturing of the phase difference image may be moved.

While the above embodiments are the application of the present invention to a phase difference microscope, the present invention is not limited to the phase difference microscope and may be applied to other microscopes such as a differential interference contrast microscope and a bright field microscope.

In the above embodiments, a determination as to whether or not the absolute value of the difference value for the target observation position R0 is greater than the threshold value Th1 is performed after the phase difference images of all observation regions are acquired. Alternatively, the determination may be performed while the phase difference image of each observation region is acquired.

### Explanation of References

10: microscope apparatus
11: white light source
12: condenser lens
13: slit plate
14: image-forming optical system
14a: phase difference lens
14b: objective lens
14c: phase plate
14d: image-forming lens
15: image-forming optical system drive unit
16: imaging element
17: horizontal drive unit
18: detection unit
18a: first displacement sensor
18b: second displacement sensor
20: imaging control apparatus
21: auto-focus control unit
22: scanning control unit
23: processing control unit
24: display control unit
30: display apparatus
40: input apparatus
50: cultivation container
51: stage
51a: opening
S: scanning start point
E: scanning end point
L: illumination light
M: scanning position of observation position
Pd: detected position
Pr: position of observation position R adjacent to detected position Pd
R: observation position
R1, R2: range of acceleration and deceleration region
W: well

## Claims

1. An imaging control apparatus comprising:
a stage on which a container accommodating an observation target is installed;
an imaging system that includes an imaging element capturing an image of the observation target;
an image-forming optical system that forms the image of the observation target in the container on the imaging element;
a horizontal drive unit that moves at least one of the stage or the image-forming optical system in a main scanning direction and a sub-scanning direction intersecting with the main scanning direction in a horizontal plane and causes the at least one of the stage or the image-forming optical system to reciprocate in the main scanning direction;
a scanning control unit that controls the horizontal drive unit;
a detection unit that includes at least two displacement sensors and switches the displacement sensor to be used in accordance with a change of the main scanning direction, the displacement sensors being arranged in the main scanning direction with the image-forming optical system interposed between the displacement sensors and detecting a vertical directional position of the container installed on the stage;
an auto-focus control unit that performs an auto-focus control based on a first position of the container in a vertical direction at the target observation position, the first position being detected by the displacement sensor preceding the image-forming optical system in the main scanning direction before the image-forming optical system reaches the target observation position in the container; and
a processing control unit that controls a process for observation of the target observation position based on the first position and a second position of the container in the vertical direction at the target observation position, the second position being detected by the displacement sensor succeeding the image-forming optical system in the main scanning direction after the image-forming optical system reaches the target observation position in the container.

2. The imaging control apparatus according to claim 1,
wherein in a case where a difference between the first position and the second position is greater than or equal to a predetermined threshold value at the target observation position, the processing control unit controls at least one of imaging of the target observation position or image processing on an image of the target observation position.

3. The imaging control apparatus according to claim 2,
wherein in a case where the difference between the first position and the second position is greater than the threshold value at the target observation position, the processing control unit re-images the target observation position.

4. The imaging control apparatus according to claim 2,
wherein in a case where the difference between the first position and the second position is greater than the threshold value at the target observation position, the processing control unit performs notification that the difference between the first position and the second position is greater than the threshold value at the target observation position.

5. The imaging control apparatus according to claim 2,
wherein in a case where the difference between the first position and the second position is greater than the threshold value at the target observation position, the processing control unit performs a sharpness enhancement process on the image of the target observation position.

6. The imaging control apparatus according to claim 1,
wherein the processing control unit changes an evaluation method for evaluating a state of the observation target included in an image of the target observation position depending on whether or not a difference between the first position and the second position is greater than a predetermined threshold value at the target observation position.

7. The imaging control apparatus according to claim 6,
wherein in a case where the difference between the first position and the second position is greater than the threshold value at the target observation position, the processing control unit evaluates the image of the target observation position using an evaluation method relatively susceptible to degradation, and
in a case where the difference between the first position and the second position is less than or equal to the threshold value at the target observation position, the processing control unit evaluates the image of the target observation position using an evaluation method relatively insusceptible to degradation.

8. The imaging control apparatus according to claim 7,
wherein in a case where the difference between the first position and the second position is greater than the threshold value at the target observation position, the processing control unit performs the evaluation using a feature amount indicating the state of the observation target included in the image of the target observation position, and
in a case where the difference between the first position and the second position is less than or equal to the threshold value at the target observation position, the processing control unit performs the evaluation using an image feature amount.

9. The imaging control apparatus according to claim 8,
wherein the feature amount indicating the state of the observation target includes at least one of a feature amount of a state of each individual cell, a feature amount of a nucleolus included in the cell, a feature amount of a white streak, a feature amount of a nucleus included in the cell, or a nucleocytoplasmic ratio (NC ratio) of the cell.

10. The imaging control apparatus according to claim 6,
wherein in a case where the difference between the first position and the second position is greater than the threshold value at the target observation position, the processing control unit excludes the target observation position from an evaluation target.

11. An imaging control method in an imaging control apparatus including a stage on which a container accommodating an observation target is installed, an imaging system that includes an imaging element capturing an image of the observation target, an image-forming optical system that forms the image of the observation target in the container on the imaging element, a horizontal drive unit that moves at least one of the stage or the image-forming optical system in a main scanning direction and a sub-scanning direction intersecting with the main scanning direction in a horizontal plane and causes the at least one of the stage or the image-forming optical system to reciprocate in the main scanning direction, a scanning control unit that controls the horizontal drive unit, and a detection unit that includes at least two displacement sensors and switches the displacement sensor to be used in accordance with a change of the main scanning direction, the displacement sensors being arranged in the main scanning direction with the image-forming optical system interposed between the displacement sensors and detecting a vertical directional position of the container installed on the stage, the method comprising:
a step of performing an auto-focus control based on a first position of the container in a vertical direction at the target observation position, the first position being detected by the displacement sensor preceding the image-forming optical system in the main scanning direction before the image-forming optical system reaches the target observation position in the container; and
a step of controlling a process for observation of the target observation position based on the first position and a second position of the container in the vertical direction at the target observation position, the second position being detected by the displacement sensor succeeding the image-forming optical system in the main scanning direction after the image-forming optical system reaches the target observation position in the container.

12. An imaging control program causing a computer to execute an imaging control method in an imaging control apparatus including a stage on which a container accommodating an observation target is installed, an imaging system that includes an imaging element capturing an image of the observation target, an image-forming optical system that forms the image of the observation target in the container on the imaging element, a horizontal drive unit that moves at least one of the stage or the image-forming optical system in a main scanning direction and a sub-scanning direction intersecting with the main scanning direction in a horizontal plane and causes the at least one of the stage or the image-forming optical system to reciprocate in the main scanning direction, a scanning control unit that controls the horizontal drive unit, and a detection unit that includes at least two displacement sensors and switches the displacement sensor to be used in accordance with a change of the main scanning direction, the displacement sensors being arranged in the main scanning direction with the image-forming optical system interposed between the displacement sensors and detecting a vertical directional position of the container installed on the stage, the program causing the computer to execute:
a procedure of performing an auto-focus control based on a first position of the container in a vertical direction at the target observation position, the first position being detected by the displacement sensor preceding the image-forming optical system in the main scanning direction before the image-forming optical system reaches the target observation position in the container; and
a procedure of controlling a process for observation of the target observation position based on the first position and a second position of the container in the vertical direction at the target observation position, the second position being detected by the displacement sensor succeeding the image-forming optical system in the main scanning direction after the image-forming optical system reaches the target observation position in the container.
